Europäisches Patentamt

European Patent Office

Office européen des brevets

(11) Veröffentlichungsnummer : **0 108 913**
**B1**

# (12) EUROPÄISCHE PATENTSCHRIFT

(45) Veröffentlichungstag der Patentschrift :
28.05.86

(51) Int. Cl.⁴ : **A 47 J 27/62**

(21) Anmeldenummer : 83109985.8

(22) Anmeldetag : 06.10.83

(54) Kochgefäss aus Kochtopf und Deckel, insbesondere Dampfdruckkochtopf.

(30) Priorität : 20.10.82 DE 3238768

(43) Veröffentlichungstag der Anmeldung :
23.05.84 Patentblatt 84/21

(45) Bekanntmachung des Hinweises auf die Patenterteilung : 28.05.86 Patentblatt 86/22

(84) Benannte Vertragsstaaten :
AT BE CH FR GB IT LI LU NL SE

(56) Entgegenhaltungen :
CH-A- 467 052
DE-A- 2 909 129
DE-A- 2 910 789
DE-A- 2 932 039
DE-B- 1 271 853
FR-A- 2 287 885
GB-A- 660 077
US-A- 3 187 163

(73) Patentinhaber : **Kurt Wolf & Co. KG**
**Langwiesenweg 67/71**
**D-7547 Wildbad (DE)**

(72) Erfinder : **Wolf, Kurt, Ing. grad.**
**Langwiesenweg 71**
**D-7547 Wildbad (DE)**
Erfinder : **Andre, Wolfram, Dipl.-Ing.**
**Eichenweg 7**
**D-7307 Aichwald 4 (DE)**

(74) Vertreter : **Vogel, Georg**
**Hermann-Essig-Strasse 35 Postfach 105**
**D-7141 Schwieberdingen (DE)**

Jouve, 18, rue St-Denis, 75001 Paris, France

## Beschreibung

Die Erfindung betrifft ein Kochgefäß aus Kochtopf und Deckel, insbesondere Dampfdruckkochtopf, an dem ein temperaturabhängiger Widerstand als Temperatursensor mit nachgeschaltetem Auswertegerät zur Erfassung der Temperatur im Kochtopf und zur Abgabe von der erfaßten Temperatur entsprechenden elektrischen Signalen angebracht ist, bei dem auf der Außenfläche des Kochtopfes außerhalb des Topfbodens eine Abgriffstelle vorgesehen ist, an der der Temperatursensor in wärmeleitender Verbindung angebracht bzw. anbringbar ist und die Abgriffstelle mittels eines Ansatzes eines lösbar am Kochtopf angebrachten Griffstückes abgedeckt ist.

Ein Kochgefäß dieser Art ist durch die CH-A-467 052 bekannt. Der Temperatursensor ist dabei im unteren Bereich der Topfwandung angebracht und das Heizelement ist fest mit dem Topfboden verbunden. Ein derartiges Kochgefäß ist nicht nur sehr teuer, die Temperaturmessung ist jedoch gerade in der Aufheizphase nicht genau genug, um aus der auftretenden Temperatur-Zeit-Charakteristik Anhaltspunkte über Art und Menge des Kochgutes im Kochgefäß ableiten zu können.

Durch die DE-A-29 32 039 ist ein Kochgefäß bekannt, bei dem der Temperatursensor im Bereich des im Deckel angeordneten Überdruckventils untergebracht ist und über ein innerhalb des Deckels geführtes Anschlußkabel mit dem in einen Aufnahmeraum des Griffstückes am Deckel eingesetzten Auswertegerät in Verbindung steht.

Dieses bekannte Kochgefäß hat verschiedene Nachteile. Zum einen ist die Temperaturerfassung im Bereich des Überdruckventils, insbesondere während der Aufheizphase, sehr ungenau und zum anderen ist das Auswertegerät ein fester Bestandteil des Kochgefäßes. Das Auswertegerät kann dabei nur die ihm eigene Funktion der Anzeige bestimmter Temperaturwerte oder der Abgabe drahtloser elektrischer Steuersignale zur Beeinflussung von Garzeitwählern oder zur Regelung der Heizleistung ausführen. Jedes Kochgefäß erfordert ein eigenes Auswertegerät, das so eingebaut und ausgelegt werden muß, daß es beim Reinigen des Deckels vor eindringender Feuchtigkeit geschützt ist.

Aus der DE-A-29 09 129 ist ein Kochgefäß bekannt, bei dem das Überdruckventil eine mechanische Anzeigeeinrichtung und einen elektrischen Schalter steuert, der bei Erreichen einer vorgegebenen Temperatur einen akustischen Signalgeber einschaltet. Der akustische Signalgeber ist dabei auf das im Knopf des Deckels untergebrachte Überdruckventil aufsteckbar.

Dieses bekannte Kochgefäß erfordert ein speziell ausgebildetes Überdruckventil, hat aber den Vorteil, daß der akustische Signalgeber bei der Reinigung des Deckels von dem Deckel gelöst werden kann. Eine Temperaturmessung, wie mit einem Temperatursensor, ist bei diesem Kochgefäß jedoch nicht möglich und außerdem wird der elektrische Schalter bei einer vorgegebenen Temperatur im Bereich des Deckels ausgelöst, die in der Aufheizphase nicht der Temperatur des Wasserinhaltes entspricht. Die kritische Temperatur des Wasserinhaltes wird schon erreicht, bevor über das Auswertegerät ein Signal abgegeben wird. Dieser Zustand ist unerwünscht, da ein Öffnen des Deckels in dieser Phase schon gefährlich sein kann.

Es ist Aufgabe der Erfindung, ein Kochgefäß der eingangs erwähnten Art zu schaffen, das mit minimalem Mehraufwand für eine Temperaturmessung vorbereitet ist und dabei je nach gewünschter Anzeige oder Steuerung den Einsatz verschiedener Auswertegeräte ermöglicht, die zudem noch für mehrere Kochgefäße verwendet werden können.

Diese Aufgabe wird nach der Erfindung in äquivalenter Weise einmal dadurch gelöst, daß das Griffstück des Kochtopfes eine Steckaufnahme für das als getrennte Steckeinheit ausgebildete Auswertegerät aufweist, in der Anschlußkontakte für an der Steckeinheit angeordnete Gegenkontakte vorgesehen sind und daß die Steckeinheit mechanisch in der Steckaufnahme festlegbar ist, wobei die Gegenkontakte der Steckeinheit mit den in der Steckaufnahme festgelegten Anschlußkontakten in elektrisch leitender Verbindung stehen, und zum anderen dadurch, daß das Griffstück des Kochtopfes einem Griffstück des Deckels zugekehrt mit Anschlußkontakten versehen ist, die in der Schließstellung des Kochgefäßes mit an dem Griffstück des Deckels angebrachten Gegenkontakten in Verbindung stehen, daß das Griffstück des Deckels eine Steckaufnahme für das als getrennte Steckeinheit ausgebildete Auswertegerät aufweist, in der Anschlußkontakte für an der Steckeinheit angeordnete Gegenkontakte vorgesehen sind, daß die Gegenkontakte und die Anschlußkontakte im Griffstück des Deckels elektrisch miteinander verbunden sind und daß die Steckeinheit mechanisch in der Steckaufnahme festlegbar ist, wobei die Gegenkontakte der Steckeinheit mit den in der Steckaufnahme festgelegten Anschlußkontakten in elektrisch leitender Verbindung stehen.

Der Kochtopf mit seinem Griffstück ist so ausgestaltet, daß er jederzeit an einer optimal gewählten Abgriffstelle die Anbringung eines Temperatursensors ermöglicht. Das als getrennte Steckeinheit ausgebildete Auswertegerät ist wahlweise mit dem einen oder anderen Kochgefäß verbindbar und stellt eine selbständige Einheit dar, die je nach gewünschter Funktion — nur Anzeige bestimmter Temperaturwerte oder Abgabe eines drahtlosen Steuersignals entsprechend der erfaßten Temperatur — ausgelegt sein kann. Der Temperatursensor kann aber auch fest mit dem Kochtopf verbunden und mit seinen Anschlußkontakten in das Griffstück des Kochtopfes integriert sein. Diese Vorleistung an dem Kochgefäß fällt kostenmäßig nicht ins Gewicht, das Kochgefäß ist aber jederzeit entsprechend den gewünschten Funktionen nachrüstbar, wobei es für das Kochgefäß keine Rolle spielt, wie die Signale des Auswertesignals aussehen und was mit diesen Signalen bewirkt wird. Das so geschaffene Kochgefäß ist auf alle möglichen Weiterentwicklungen der Koch- und Garzeitvorgabe, der Regelung der Heizleistung und dgl. vorbereitet. Die Griffstücke am Kochtopf und am Deckel können ihre ergonomisch günstige Form für die Handhabung des Kochgefäßes praktisch unverändert beibehalten, da die Steckaufnahme im Griffstück des Kochtopfes bzw. des Deckels als in Längsrichtung desselben verlaufende hinterschnittene Aufnahme ausgebildet ist, in die die Steckeinheit mit einem entsprechenden Steckteil einführbar und mechanisch festlegbar ist.

Wird der Temperatursensor als Vorleistung bereits am Kochtopf angebracht, so ist nach einer bevorzugten Ausgestaltung vorgesehen, daß der Temperatursensor fest mit der Abgriffstelle verbunden, vorzügsweise verklebt oder verschweißt ist und daß die Anschlüsse des Temperatursensors mittels eines in einer Aufnahme des Ansatzes geführten Anschlußkabels mit den Anschlußkontakten in der Steckaufnahme des Griffstückes des Kochtopfes bzw. den dem Griffstück des Deckels zugekehrten Anschlußkontakten des Griffstückes des Kochtopfes verbunden sind.

Soll der Temperatursensor nachrüstbar sein, dann ist eine Ausgestaltung von Vorteil, die dadurch gekennzeichnet ist, daß der Kochtopf im Bereich der Abgriffstelle einen Gewindebolzen trägt, an dem lösbar eine den Temperatursensor umschließende und mit diesem in wärmeleitender Verbindung stehende Befestigungsschelle anschraubbar ist. In zweckmäßiger Weiterbildung kann dabei zusätzlich vorgesehen sein, daß der Gewindebolzen zusätzlich zur Festlegung des Ansatzes des Griffstückes am Kochtopf ausgenützt ist.

Je nach Anschluß der Steckeinheit an dem Griffstück des Kochtopfes bzw. an dem Griffstück des Deckels ist nach weiteren Ausgestaltungen vorgesehen, daß die Steckaufnahme in die Unterseite des am Kochtopf horizontal abstehenden Griffstückes eingebracht ist, bzw. daß die Steckaufnahme in die Oberseite des am Deckel horizontal abstehenden Griffstückes eingebracht ist.

Eine eindeutige elektrische Durchschaltung zwischen den beiden Griffstücken wird nach einer Ausgestaltung dadurch erreicht, daß die einander zugekehrten Anschlußkontakte und Gegenkontakte der Griffstücke als Schleifkontakte und Schleifbahnen von Schleifkontaktverbindungen ausgebildet sind, wobei die Schleifbahnen quer zur Längsachse der Griffstücke gerichtet sind.

Die Steckeinheit ist gemäß der gewünschten Funktion so gestaltet, daß die Steckeinheit mit optischen Anzeigeelementen versehen ist, die beim Erreichen vorgegebener Temperaturen Anzeigesignale abgeben und/oder daß die Steckeinheit mit einem Ultraschall- bzw. Infrarotwellen-Sender versehen ist, der der erfaßten Temperatur entsprechende elektrische Signale abstrahlt.

Die Erfindung wird anhand von verschiedenen, in den Zeichnungen dargestellten Ausführungsbeispielen näher erläutert. Es zeigt:

Figur 1 ein Kochgefäß mit Temperaturfühler am Kochtopf und einer Steckaufnahme für das als Steckeinheit ausgebildete Auswertegerät auf der Unterseite des Griffstückes am Kochtopf,

Figur 2 ein Kochgefäß mit Temperaturfühler am Kochtopf und einer Steckaufnahme für das als Steckeinheit ausgebildete Auswertegerät auf der Oberseite des Griffstückes am Deckel und

Figur 3 eine vergrößerte Teilansicht, die die Steckverbindung zwischen dem Griffstück des Kochtopfes und des als Steckeinheit ausgebildeten Auswertegerätes erkennen läßt.

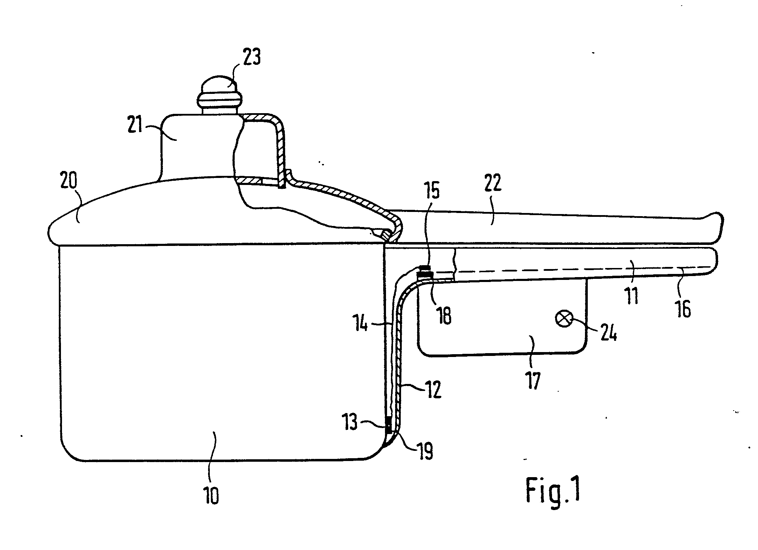

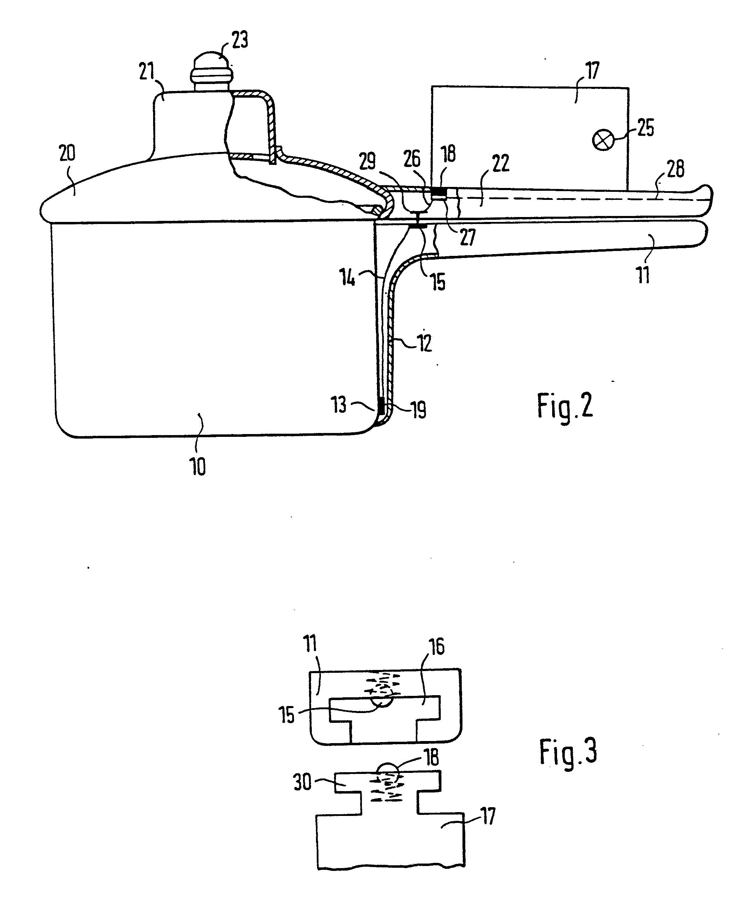

Das Kochgefäß nach der Erfindung besteht aus dem Kochtopf 10 und dem Deckel 20. An dem Kochtopf 10 ist das horizontal abstehende Griffstück 11 und an dem Deckel 20 das horizontal abstehende Griffstück 22 angebracht. Die Griffstücke 11 und 22 stehen in der Schließstellung des Kochgefäßes übereinander und dienen in an sich bekannter Weise zur Verriegelung von Deckel 20 und Kochtopf 10. Im Dom 21 des Deckels 20 ist das Überdruckventil untergebracht, das die Anzeigeeinrichtung 23 steuert. Diese Grundkonzeption des Kochgefäßes wird auch bei der Erfindung beibehalten, wie die Ausführungsbeispiele nach den Fig. 1 und 2 zeigen.

Nach der Erfindung wird nun aber zur Temperaturmessung eine Abgriffstelle 13 an der Außenseite des Kochtopfes 10 bestimmt, die am Anfang des der Topfwand zugekehrten konvexen Übergangsbereiches zum Topfboden liegt. Diese Abgriffstelle 13 ist gewählt, da hier die Temperaturdifferenz zwischen der Temperatur des Wasserinhaltes und der Außenfläche des Kochtopfes 10 während der Anheizphase praktisch Null ist. Wird an der Abgriffstelle 13 ein Temperatursensor 19 in wärmeleitender Verbindung angebracht, dann wird gerade in der kritischen Aufheizphase die Temperatur des Wasserinhaltes exakt erfaßt. Dies ist wichtig, da mit dem Erreichen der kritischen Temperatur von etwa 100 °C bereits die Dampfbildung einsetzt und ein Öffnen des Deckels 20 in dieser Phase bereits gefährlich ist. Die Anzeigeeinrichtung 23 am Deckel 20 spricht hier noch nicht an, da dafür bereits ein bestimmter Druck im Kochgefäß erforderlich ist.

Ist das Kochgefäß aufgeheizt, dann ist die Stelle, an der die Temperatur gemessen wird, unkritisch, da der gesamte Kochgefäß-Innenraum praktisch dieselbe Temperatur aufweist. Daher wird auch im aufgeheizten Zustand die Temperatur exakt erfaßt.

Der Vorteil des neuen Kochgefäßes liegt nun darin, daß die Abgriffstelle 13 auf jeden Fall vorgesehen wird und mittels des Ansatzes 12 des Griffstückes 11 abgedeckt wird. Außerdem wird beim Ausführungsbeispiel nach Fig. 1 auf der Unterseite des Griffstückes 11 eine längsgerichtete Steckaufnahme 16 eingebracht, in die das als getrennte Steckeinheit 17 ausgebildete Auswertegerät eingesteckt werden kann. Wie Fig. 3 zeigt, kann die Steckaufnahme 16 eine im Querschnitt T-förmige hinterschnittene Aufnahmenut sein, in die das T-förmige Steckteil 30 der Steckeinheit 17 eingeführt und darin mechanisch gehalten werden kann. Die Steckaufnahme 16 weist vorzugsweise abgefederte Anschlußkontakte 13 auf, die mit entsprechenden Gegenkontakten 18 an der Steckeinheit 17 in elektrische Verbindung kommen, wenn die Steckeinheit 17 bis zum Endanschlag der Steckaufnahme 16 eingesteckt wird, wie die angedeuteten Federn erkennen lassen.

Es ist leicht einzusehen, daß die Steckaufnahme 16 verschiedene Auswertegeräte aufnehmen kann, wenn diese als gleiche Steckeinheiten 17 ausgebildet sind.

Der Temperatursensor 19 kann als Vorleistung bereits fest mit der Abgriffstelle 13 verbunden sein und ist mittels des Anschlußkabels 14 bereits mit den Anschlußkontakten 15 im Griffstück 11 elektrisch verbunden. Dieser Mehraufwand verteuert das Kochgefäß praktisch nicht, es ist aber für eine exakte Temperaturerfassung vorbereitet. Es braucht später nur noch ein Auswertegerät beschafft zu werden, das darüber hinaus für mehrere so vorbereitete Kochgefäße verwendbar ist und auch auf verschiedene Funktionen ausgelegt sein kann.

Weist das Anzeigegerät optische Anzeigelampen 24 auf, dann können bestimmte vorgegebene Temperaturen auf einfache Weise angezeigt werden. Am wichtigsten ist dabei das Erreichen der kritischen Temperatur von etwa 100°C während der Aufheizphase, da von diesem Zeitpunkt ab ein Öffnen des Deckels gefährlich ist. Außerdem kann dieses die kritische Temperatur anzeigende Signal auch zur Steuerung eines Garzeitwählers verwendet werden. Dabei ist es von Vorteil, wenn die Steckeinheit 17, wie beim Ausführungsbeispiel nach Fig. 2, einen Ultraschall- bzw. Infrarot-Sender 25 aufweist, der das Signal drahtlos zu einem getrennten Garzeitwähler oder dgl. überträgt. Die von dem Auswertegerät so abgegebenen, drahtlos übertragenen Signale können über geeignete Empfangseinrichtungen auch zur Regelung der Heizleistung verwendet werden, wobei es auch sehr wesentlich ist, in der Anheizphase die Temperatur exakt zu erfassen, um bei großer Heizleistung in der Endphase des Aufheizvorganges optimaler in die Arbeitstemperatur einregeln zu können.

Bei dem Ausführungsbeispiel nach Fig. 2 kann die Steckeinheit 17 in die längsgerichtete Steckaufnahme 28 des Griffstückes 22 am Deckel 20 eingeführt und darin mechanisch gehalten werden. Die Steckaufnahme 28 weist wieder Anschlußkontakte 27 auf, die mit den Gegenkontakten 18 der Steckeinheit 17 in Verbindung kommen. Das Anschlußkabel 14 von dem Temperatursensor 19 führt auf Anschlußkontakte 15 im Griffstück 11 am Kochtopf 10, die auf der dem Griffstück 22 am Deckel 20 zugekehrten Seite angeordnet sind. Das Griffstück 22 am Deckel 20 weist Gegenkontakte 29 auf, die über Verbindungskabel 26 mit den Anschlußkontakten 27 im Griffstück 22 des Deckels 20 elektrisch verbunden sind. Die Anschlußkontakte 15 im Griffstück 11 am Kochtopf 10 und die Gegenkontakte 29 im Griffstück 22 am Deckel 20 sind vorzugsweise als Schleifkontakte und Schleifbahnen von Schleifkontaktverbindungen ausgebildet, die in der Schließstellung des Kochgefäßes durchschalten. Die Schleifbahnen sind dabei quer zur Längsachse der Griffstücke 11 und 22 gerichtet.

## Patentansprüche

1. Kochgefäß aus Kochtopf (10) und Deckel (20), insbesondere Dampfdruckkochtopf, an dem ein temperaturabhängiger Widerstand als Temperatursensor (19) mit nachgeschaltetem Auswertegerät zur Erfassung der Temperatur im Kochtopf (10) und zur Abgabe von der erfaßten Temperatur entsprechenden elektrischen Signalen angebracht ist, bei dem auf der Außenfläche des Kochtopfes (10) außerhalb des Topfbodens eine Abgriffstelle (13) vorgesehen ist, an der der Temperatursensor (19) in wärmeleitender Verbindung angebracht bzw. anbringbar ist und die Abgriffstelle (13) mittels eines Ansatzes (12) eines lösbar am Kochtopf (10) angebrachten Griffstückes (11) abgedeckt ist, dadurch gekennzeichnet, daß das Griffstück (11) des Kochtopfes (10) eine Steckaufnahme (16) für das als getrennte Steckeinheit (17) ausgebildete Auswertegerät aufweist, in der Anschlußkontakte (15) für an der Steckeinheit (17) angeordnete Gegenkontakte (18) vorgesehen sind und daß die Steckeinheit (17) mechanisch in der Steckaufnahme (16) festlegbar ist, wobei die Gegenkontakte (18) der Steckeinheit (17) mit den in der Steckaufnahme (16) festgelegten Anschlußkontakten (15) in elektrisch leitender Verbindung stehen.

2. Kochgefäß aus Kochtopf (10) und Deckel (20), insbesondere Dampfdruckkochtopf, an dem eine temperaturabhängiger Widerstand als Temperatursensor (19) mit nachgeschaltetem Auswertegerät zur Erfassung der Temperatur im Kochtopf (10) und zur Abgabe von der erfaßten Temperatur entsprechenden elektrischen Signalen angebracht ist, bei dem auf der Außenfläche des Kochtopfes (10) außerhalb des Topfbodens eine Abgriffstelle (13) vorgesehen ist, an der der Temperatursensor (19) in wärmeleitender Verbindung angebracht bzw. anbringbar ist und die Abgriffstelle (13) mittels eines Ansatzes (12) eines lösbar am Kochtopf (10) angebrachten Griffstückes (11) abgedeckt ist, dadurch gekennzeichnet, daß das Griffstück (11) des Kochtopfes (10) einem Griffstück (22) des Deckels (20) zugekehrt mit Anschlußkontakten (15) versehen ist, die in der Schließstellung des Kochgefäßes mit an dem Griffstück (22) des Deckels (20) angebrachten Gegenkontakten (29) in Verbindung stehen, daß das Griffstück (22) des Deckels (20) eine Steckaufnahme (28) für das als getrennte Steckeinheit (17) ausgebildete Auswertegerät aufweist, in der Anschlußkontakte (27) für an der Steckeinheit (17) angeordnete Gegenkontakte (17) vorgesehen sind, daß die Gegenkontakte (29) und die Anschlußkontakte (27) im Griffstück (22) des Deckels (20) elektrisch miteinander verbunden sind und daß die Steckeinheit (17) mechanisch in der Steckaufnahme (28) festlegbar ist, wobei die Gegenkontakte (18) der Steckeinheit (17) mit den in der Steckaufnahme (28) festgelegten Anschlußkontakten (27) in elektrisch leitender Verbindung stehen.

3. Kochgefäß nach Anspruch 1 oder 2, dadurch gekennzeichnet, daß der Temperatursensor (19) fest mit der Abgriffstelle (13) verbunden, vorzugsweise verklebt oder verschweißt ist und daß die Anschlüsse des Temperatursensors (17) mittels eines in einer Aufnahme des Ansatzes (12) geführten Anschlußkabels (14) mit den Anschlußkontakten (15) in der Steckaufnahme (16) des Griffstückes (11) des Kochtopfes (10) bzw. den dem Griffstück (22) des Deckels (20) zugekehrten Anschlußkontakten (27) des Griffstückes (11) des Kochtopfes (10) verbunden sind.

4. Kochgefäß nach Anspruch 1 oder 2, dadurch gekennzeichnet, daß der Kochtopf (10) im Bereich der Abgriffstelle (13) einen Gewindebolzen trägt, an dem lösbar eine den Temperatursensor (19) umschließende und mit diesem in wärmeleitender Verbindung stehende Befestigungsschelle anschraubbar ist.

5. Kochgefäß nach Anspruch 4, dadurch gekennzeichnet, daß der Gewindebolzen zusätzlich zur Festlegung des Ansatzes (12) des Griffstückes (11) am Kochtopf (10) ausgenützt ist.

6. Kochgefäß nach einem der Ansprüche 1 bis 5, dadurch gekennzeichnet, daß die Steckaufnahme (16 bzw. 28) im Griffstück (11 bzw. 22) des Kochtopfes (10) bzw. des Deckels (20) als in Längsrichtung desselben verlaufende hinterschnittene Aufnahme ausgebildet ist, in die die Steckeinheit (17) mit einem entsprechenden Steckteil (30) einführbar und mechanisch festlegbar ist.

7. Kochgefäß nach Anspruch 6, dadurch gekennzeichnet, daß die Steckaufnahme (16) in die Unterseite des am Kochtopf (10) horizontal abstehenden Griffstückes (11) eingebracht ist.

8. Kochgefäß nach Anspruch 6, dadurch gekennzeichnet, daß die Steckaufnahme (28) in die Oberseite des am Deckel (20) horizontal abstehenden Griffstückes (22) eingebracht ist.

9. Kochgefäß nach Anspruch 2, dadurch gekennzeichnet, daß die einander zugekehrten Anschlußkontakte (15) und Gegenkontakte (29) der Griffstücke (11 und 22) als Schleifkontakte und Schleifbahnen von Schleifkontaktverbindungen ausgebildet sind, wobei die Schleifbahnen quer zur Längsachse der Griffstücke (11, 22) gerichtet sind.

10. Kochgefäß nach einem der Ansprüche 1 bis 9, dadurch gekennzeichnet, daß die Steckeinheit (17) mit optischen Anzeigeelementen (24) versehen ist, die beim Erreichen vorgegebener Temperaturen Anzeigesignale abgeben.

11. Kochgefäß nach einem der Ansprüche 1 bis 10, dadurch gekennzeichnet, daß die Steckeinheit (17) mit einem Ultraschall- bzw. Infrarotwellen-Sender (25) versehen ist, der der erfaßten Temperatur entsprechende elektrische Signale abstrahlt.

**Claims**

1. Cooking vessel consisting of cooking pot (10) and lid (20), especially pressure cooker, which is fitted with a resistor dependent on temperature as a temperature sensor (19) with evaluating device connected to it for the evaluation of the temperature inside the cooker (10) and for giving electrical signals corresponding to the evaluated temperature, which is provided with a tap (13) on the outside surface of the cooker (10) outside the bottom of the cooker, on which the temperature sensor (19) is mounted or can be mounted in heatconducting manner and the tap (13) is covered by means of a cover sheet (12) shaping a part of the handle (11) which is fitted to the cooker (10) so that it can be removed, characterized by the fact that the handle piece (11) of the cooker (10) is provided with a socket (16) for the evaluating device which is designed as a separate plug-in unit (17), on which connectors (15) are provided for the sockets (18) arranged on the plug-in unit (17) and that the plug-in unit (17) can mechanically be fixed on the socket (16), whereby the connectors (18) of the plug-in unit (17) are electrically connected with the connectors (15) which are provided in the plug-in unit (16).

2. Cooking vessel consisting of cooking pot (10) and lid (20), especially pressure cooker, which is fitted with temperature-dependent resistor as a temperature sensor (19) with evaluating device connected to it for the evaluation of the temperature inside the cooker (10) and for giving electrical signals corresponding to the measured temperature, which is provided with a tap (13) on the outside surface of the cooker (10) outside the bottom of the cooker, on which the temperature sensor (19) is mounted or can be mounted in heatconducting manner and the tap (13) is covered by means of a cover sheet (12) shaped by the handle (11) which is fitted to the cooker (10) so that it can be removed, characterized by the fact that the lower handle piece (11) of the cooker (10) corresponds to the upper handle piece (22) of the lid (20), and is provided with connectors (15), which are in connection with the sockets (29) fitted to the upper handle piece (22) of the lid (20) in the closing position of the cooking vessel that the upper handle piece (22) of the lid (20) is provided with a socket (28) for plugging-in the evaluating device which is designed as a separate plug-in unit (17) on which connectors (27) are provided and matched to sockets (17) arranged on the plug-in unit (17), that the sockets (29) and the connectors (27) in the handle piece (22) of the lid (20) are connected together electrically and that the plug-in unit (17) can be mechanically fixed to the socket (28), whereby the sockets (18) of the plug-in unit (17) are in electrically conductive connection with the connectors (27), of the socket (28).

3. Cooking vessel according to claim 1 or 2, characterized by the fact that the temperature sensor (19) is firmly connected with the tap (13), preferably glued together or welded and that the connections of the temperature sensor (17) are connected to the connectors (15) in the plug-in unit (16) of the handle piece (11) of the cooker (10) respectively to the connectors (27) of the handle piece (11) of the cooker (10) by means of a connecting cable (14) that is lead in a means of the cover sheet (12).

4. Cooking vessel according to claim 1 or 2, characterized by the fact that the cooker (10) is provided with a threaded bolt in the area of the tap (13) to which a fastening clamp can be screwed and also removed which is surrounding the temperature sensor (19) and is in heat conducting connection with it.

5. Cooking vessel according to claim 4, characterized by the fact that the treaded bolt is additionally used as fastening device for the cover sheet (12) of the handle piece (11) on the cooker (10).

6. Cooking vessel according to one of the claims 1 to 5, characterized by the fact that the locating socket (16 resply. 28) in the handle piece (11 resply. 22) of the cooker (10) respectively the lid (20) is designed as a locating mean being longitudinal to the latter, into which the plug-in unit (17) can be inserted by means of a corresponding plug element (30) which can be mechanically located.

7. Cooking vessel according to claim 6, characterized by the fact that the plug-in unit (16) is fitted into the lower part of the handle piece (11) which is protruding horizontally from the cooker.

8. Cooking vessel according to claim 6, characterized by the fact that the plug-in unit (28) is fitted into the upper part of the handle piece (22) protruding horizontally from the lid (20).

9. Cooking vessel according to claim 2, characterized by the fact that the connecting contacts (15) which are facing each other and the sockets (29) of the upper and lower part of the handle (11 and 22) are designed as sliding contacts and sliding strips of sliding contact connections, whereby the sliding strips are running vertically to the longitudinal axis of the upper and lower part of the handle (11, 22).

10. Cooking vessel according to one of the claims 1 to 9, characterized by the fact that the plug-in unit (17) is provided with visual indicating elements (24), which give indicating signals when reaching a set temperature.

11. Cooking vessel according to one of the claims 1 to 10, characterized by the fact that the plug-in unit (17) is provided with an ultrasonic-respectively infrared-wave transmitter (25), which emits electrical signals corresponding to the measured temperature.

**Revendications**

1. Récipient de cuisson, notamment de cuisson sous pression à la vapeur, se composant d'un pot de cuisson (10) et d'un couvercle (20), sur lequel est installée une résistance dépendant de la température, faisant office de détecteur de température (19), et à laquelle un appareil d'interprétation est subordonné afin de détecter la température qui règne dans le pot de cuisson (10) et de délivrer des signaux électriques correspondant à la température ainsi détectée, récipient dans lequel est prévue, à la face externe du pot de cuisson (10) et à l'extérieur du fond de ce pot, une zone (13) de mesure dans laquelle le détecteur de température (19) est ou peut être installé en liaison thermiquement conductrice, cette zone (13) de mesure étant recouverte au moyen d'un appendice (12) d'une pièce de préhension (11) montée amoviblement sur le pot de cuisson (10), récipient caractérisé par le fait que la pièce de préhension (11) du pot de cuisson (10) présente un logement d'emboîtement (16) pour l'appareil d'interprétation réalisé en tant qu'unité emboîtable (17) séparée, logement dans lequel sont prévus des contacts de ràccordement (15) pour des contacts complémentaires (18) implantés sur l'unité emboîtable (17) ; et par le fait que l'unité emboîtable (17) peut être verrouillée mécaniquement dans le logement d'emboîtement (16), les contacts complémentaires (18) de cette unité emboîtable (17) étant en liaison électriquement conductrice avec les contacts de raccordement (15) assujettis dans le logement d'emboîtement (16).

2. Récipient de cuisson, notamment de cuisson sous pression à la vapeur, se composant d'un pot de cuisson (10) et d'un couvercle (20), sur lequel est installée une résistance dépendant de la température, faisant office de détecteur de température (19) auquel un appareil d'interprétation est subordonné afin de détecter la température régnant dans le pot de cuisson (10) et de délivrer des signaux électriques correspondant à la température ainsi détectée, récipient dans lequel est prévue, à la face externe du pot de cuisson (10) et à l'extérieur du fond de ce pot, une zone (13) de mesure dans laquelle le détecteur de température (19) est ou peut être installé en liaison thermiquement conductrice, cette zone de prélèvement (13) étant recouverte au moyen d'un appendice (12) d'une pièce de préhension (11) montée amoviblement sur le pot de cuisson (10), récipient caractérisé par le fait que la pièce de préhension (11) du pot de cuisson (10) est munie, du côté correspondant, d'une pièce de préhension (22) du couvercle (20), de contacts de raccordement (15) qui, en position fermée du récipient de cuisson, sont en liaison avec ces contacts complémentaires (29) situés sur la pièce de préhension (22) du couvercle (20) ; par le fait que la pièce de préhension (22) du couvercle (20) présente un logement d'emboîtement (28) pour l'appareil d'interprétation réalisé sous la forme d'une unité emboîtable (17) séparée, logement dans lequel sont prévus des contacts de raccordement (27) pour des contacts complémentaires (29) disposés sur l'unité emboîtable (17) ; par le fait que les contacts complémentaires (29) et les contacts de raccordement (27) dans la pièce de préhension (22) du couvercle (20) sont reliés électriquement les unes aux autres ; et par le fait que l'unité emboîtable (17) peut être verrouillée mécaniquement dans le logement d'emboîtement (28), les contacts complémentaires (18) de cette unité emboîtable (17) étant en liaison électriquement conductrice avec les contacts de raccordement (27) retenus rigidement dans le logement d'emboîtement (28).

3. Récipient de cuisson selon la revendication 1 ou 2, caractérisé par le fait que le détecteur de température (19) est relié rigidement à la zone de prélèvement (13), de préférence par collage ou par soudage ; et par le fait que les raccords de ce détecteur de température (19) sont reliés, au moyen d'un câble de raccordement (14) renfermé par un logement de l'appendice (12), aux contacts de raccordement (15) situés dans le logement d'emboîtement (16) de la pièce de préhension (11) du pot de cuisson (10) ou, respectivement, aux contacts de raccordement (27) de la pièce de préhension (11) du pot de cuisson (10) qui sont tournés vers la pièce de préhension (22) du couvercle (20).

4. Récipient de cuisson selon la revendication 1 ou 2, caractérisé par le fait que le pot de cuisson (10) porte, au voisinage de la zone (13) de mesure, une tige filetée sur laquelle peut être vissé amoviblement un collier de fixation qui entoure le détecteur de température (19) et est en liaison de conduction thermique avec ce dernier.

5. Récipient de cuisson selon la revendication 4, caractérisé par le fait que la tige filetée est utilisée en plus pour assujettir l'appendice (12) de la pièce de préhension (11) au pot de cuisson (10).

6. Récipient de cuisson selon l'une des revendications 1 à 5, caractérisé par le fait que le logement d'emboîtement (16, 28) dans la pièce de préhension (11 ; 22) du pot de cuisson (10) ou du couvercle (20), respectivement, est réalisé sous la forme d'un logement contredépouillé s'étendant dans le sens longitudinal dudit pot ou dudit couvercle, et dans lequel l'unité emboîtable (17) peut être insérée par une pièce emboîtable correspondante (30), et y être verrouillée mécaniquement.

7. Récipient de cuisson selon la revendication 6, caractérisé par le fait que le logement d'emboîtement (16) est ménagé dans la face inférieure de la pièce de préhension (11) faisant saillie horizontalement au-delà du pot de cuisson (10).

8. Récipient de cuisson selon la revendication 6, caractérisé par le fait que le logement d'emboîtement (28) est pratiqué dans la face supérieure de la pièce de préhension (22) en saillie horizontale au-delà du couvercle (20).

9. Récipient de cuisson selon la revendication 2, caractérisé par le fait que les contacts de raccordement (15) et les contacts complémentaires (29) des pièces de préhension (11, 12), tournés les uns vers les autres, sont réalisés en tant que contacts glissants et frotteurs et pistes d'enfichage de jonctions à contacts par frottement, les pistes d'enfichage étant orientées perpendiculairement à l'axe longitudinal desdites pièces de préhension (11, 22).

10. Récipient de cuisson selon l'une des revendications 1 à 9, caractérisé par le fait que l'unité emboîtable (17) est pourvue d'éléments d'affichage optique (24), qui délivrent des signaux d'affichage lorsque des températures prédéterminées sont atteintes.

11. Récipient de cuisson selon l'une des revendications 1 à 10, caractérisé par le fait que l'unité emboîtable (17) est équipée d'un émetteur (25) d'ondes ultrasonores ou infrarouges, respectivement, qui délivre des signaux électriques correspondant à la température détectée.

Fig.1

Fig.2

Fig.3